# FASCICULE DE BREVET EUROPEEN

(11) **EP 2 361 798 B1**
(45) Date de publication et mention de la délivrance du brevet: **22.05.2013**
(21) Numéro de dépôt: 11154520.8
(22) Date de dépôt: 15.02.2011
(51) Int. Cl.: B60K 17/356, F16H 61/4139, F16H 61/4035, F16H 61/439, B60K 23/08

(54) **Système de transmission hydraulique dont la pompe principale peut être actionnée en permanence**
Hydraulisches Übertragungssystem, bei dem die Hauptpumpe ständig in Betrieb sein kann.
Hydraulic transmission system in which the main pump can be permanently activated

(30) Priorité: 18.02.2010 FR 1051164
(43) Date de publication de la demande: 31.08.2011
(73) Titulaire: POCLAIN HYDRAULICS INDUSTRIE, 60411 Verberie (FR)
(72) Inventeur: Prigent, André, 60410, Saintines (FR); Basson, Benjamin, 60200, Compiegne (FR); Heren, Jean, 60280, Margny les Compiegne (FR); Lucienne, Philippe, 60300, Aumont en Halatte (FR)
(74) Mandataire: Intès, Didier Gérard André

(56) Documents cités:
- WO-A1-2005/111475
- GB-A- 2 013 841
- US-A- 3 811 525
- US-A- 4 140 196
- US-A- 5 117 936
- US-A- 5 553 517
- US-A1- 2008 238 187

## Description

L'invention concerne un dispositif de transmission hydraulique pour un véhicule, comportant une pompe principale, prévue pour alimenter en fluide au moins un moteur hydraulique, une pompe auxiliaire, prévue pour maintenir une pression de fluide minimale dans au moins un conduit auxiliaire du dispositif, et au moins un moteur hydraulique, les pompes principale et auxiliaire étant susceptibles d'être actionnées conjointement par des moyens d'entraînement pour délivrer du fluide sous pression.

Les moyens d'entraînement peuvent être de toute nature, mais en général il s'agit d'un moteur thermique, par exemple un moteur diesel. Ce dernier cas sera utilisé dans la présentation qui suit pour faciliter la compréhension ; cependant, l'exposé reste applicable quels que soient les moyens d'entraînement actionnant les pompes du dispositif.

L'invention vise en particulier les dispositifs du type indiqué précédemment utilisés en appoint ou en assistance sur une machine ou un véhicule. Par exemple, un tel dispositif peut être monté sur un véhicule pour permettre en cas de besoin d'actionner le moteur hydraulique comme moteur d'appoint ou d'assistance, dans des conditions de déplacement difficiles du véhicule comme un sol glissant, une forte pente, etc. Typiquement le moteur hydraulique est agencé sur un essieu du véhicule ; aussi, lorsque le dispositif de transmission hydraulique est activé, le véhicule dispose de roues motrices supplémentaires.

Le document US 3 811 525 divulgue les caractéristiques du préambule de la revendication 1.

Une application particulièrement importante de l'invention concerne les dispositifs d'assistance hydrauliques montés sur des véhicules routiers, comme des poids lourds, qui peuvent rouler à une certaine vitesse (plus de 50 km/h). Dans ce cas, le dispositif d'assistance hydraulique doit respecter certaines contraintes additionnelles : D'une part, il doit assurer une sécurité complète lors des déplacements à vitesse élevée, ce qui signifie qu'un déclenchement intempestif des moteurs d'assistance doit être à peu près impossible ; d'autre part, le dispositif doit permettre la mise en route des moteurs d'assistance lorsque le véhicule avance, et pas seulement lorsqu'il est à l'arrêt ou roule à vitesse très faible (inférieure à 5 km/h).

Dans de tels dispositifs d'assistance, on utilise de manière connue comme pompe principale une pompe hydraulique à débit variable. Une telle pompe permet d'adapter la vitesse des moteurs en fonction du besoin.

L'invention vise en particulier les dispositifs d'assistance hydraulique comportant de telles pompes comme pompe principale, et plus généralement ceux dans lesquels est utilisée comme pompe principale une pompe qui peut être actionnée sans débiter, mais nécessite dans ce cas là qu'une pression minimale soit appliquée à ses orifices principaux. Si de telles pompes sont actionnées alors qu'une pression inférieure à la pression minimale précitée règne à l'un ou l'autre des orifices principaux de la pompe, un risque de dégradation de la pompe est encouru.

En revanche, il convient de noter que l'invention ne concerne pas les dispositifs de transmission hydraulique équipant des véhicules dont la transmission principale est elle-même hydraulique, et comporte donc une pompe principale actionnée de manière sensiblement permanente pendant le fonctionnement du véhicule.

Dans un dispositif d'assistance tels que ceux visés par l'invention, comme le dispositif d'assistance n'est sollicité qu'occasionnellement, le problème se pose de l'activation du dispositif de transmission hydraulique.

La solution habituellement retenue consiste à prévoir un système d'embrayage, interposé entre le moteur thermique du véhicule ou de la machine, et la pompe principale du dispositif. Cependant, un système d'embrayage est assez coûteux, occupe un grand volume et requiert une maintenance importante.

Pour les systèmes à assistance hydraulique, en plus d'un système d'embrayage, il est nécessaire de prévoir des moteurs hydrauliques à pistons radiaux de type décrabotable, ce qui permet d'éviter la rotation à vide des moteurs. De tels moteurs comportent un bloc-cylindres dans lequel sont aménagés des cylindres dans lesquels coulissent des pistons. Ces moteurs sont susceptibles d'adopter une configuration de travail, dans laquelle les pistons peuvent générer un couple moteur ou de freinage sous l'effet d'une différence de pression de fluide entre les conduits de moteur, ainsi qu'une configuration dite de roue libre, dans laquelle les pistons sont maintenus en position rentrée à l'intérieur des cylindres et ne génèrent aucun couple. Les pistons sont maintenus en position rentrée sous l'effet de moyens mécaniques comme des ressorts ou autre, et/ou sous l'effet d'une pression régnant dans un espace interne au moteur, aménagé en général à l'intérieur du carter qui abrite le bloc-cylindres.

Dans des dispositifs de transmission hydraulique comprenant de tels moteurs, il est utile de disposer à tout moment d'une pression minimale, pour appliquer celle-ci à l'intérieur de l'espace interne des moteurs et ainsi assurer le maintien du moteur en position décrabotée, pistons rentrés dans les cylindres.

Aussi, le perfectionnement adopté dans de tels circuits consiste à prévoir que la pompe principale soit débrayable au moyen d'un embrayage, mais que le moteur thermique actionne en revanche en permanence la pompe auxiliaire du dispositif ou pompe de gavage. Celle-ci assure alors en permanence une pression minimale, qui peut être utilisée pour maintenir les moteurs en sécurité dans l'état décraboté.

Comme la pompe principale est débrayée quand aucune assistance hydraulique n'est demandée, cela garantit qu'elle ne risque pas d'être endommagée sous l'effet d'une pression insuffisante à ses orifices principaux.

Ce perfectionnement comporte toujours l'inconvénient d'utiliser un embrayage, mais apporte une certaine sécurité pour l'utilisation des moteurs hydrauliques décrabotables décrits. Par ailleurs, la pompe auxiliaire entraînée en permanence suscite une consommation d'énergie non négligeable. De plus, le moteur thermique doit avoir deux sorties, l'une vers l'embrayage relié à la pompe principale, l'autre vers la pompe auxiliaire. Cela crée des problèmes d'encombrement, et requiert un design spécifique du moteur thermique.

L'objectif de l'invention est de proposer un système de transmission pour un véhicule, comportant une transmission principale non-hydraulique apte à entraîner des organes de déplacement du véhicule, et une transmission auxiliaire constituée par un dispositif de transmission hydraulique pour un véhicule, le dispositif comportant :
- une pompe principale prévue pour alimenter en fluide au moins un moteur hydraulique ;
- une pompe auxiliaire prévue pour maintenir une pression de fluide minimale dans au moins un conduit auxiliaire ;
- un limiteur de pression relié à un orifice de refoulement de la pompe auxiliaire ;
   les pompes principale et auxiliaire étant susceptibles d'être actionnées conjointement par des moyens d'entraînement pour délivrer du fluide sous pression ; et
- ledit au moins un moteur étant prévu pour entraîner au moins un organe de déplacement du véhicule ; dispositif présentant une consommation d'énergie relativement faible, et utilisant des moyens simples et nécessitant peu de maintenance.

Cet objectif est atteint grâce au fait que le dispositif comporte :
- une liaison dite de bipasse entre un orifice de refoulement de la pompe auxiliaire et un réservoir sans surpression ;
- de premiers moyens de restriction, agencés sur la liaison de bipasse, et aptes à maintenir une pression de protection de pompe, ladite pression de protection de pompe étant inférieure à une pression de tarage dudit limiteur de pression, dans une partie de protection de pompe de la liaison de bipasse ;
- des moyens pour appliquer ladite pression de protection de pompe à des orifices principaux de la pompe principale lorsque celle-ci est actionnée mais ne débite pas.

Avantageusement, le système ne comporte pas, ou du moins pas nécessairement, d'embrayage.

Cependant, dans un mode de réalisation, le système comporte un embrayage. Grâce au dispositif, le système peut alors présenter un mode de fonctionnement (dit mode 'embrayé') dans lequel l'embrayage reste embrayé en permanence, et est donc peu sollicité ; ce mode présentant des phases passives, durant lesquelles la pompe principale ne débite pas, et la pompe auxiliaire maintient la pression de protection de pompe dans la partie de protection de pompe de la liaison de bipasse ce qui assure la protection de la pompe principale ; et des phases actives, durant lesquelles la pompe principale débite et actionne le (ou les) moteurs hydrauliques.

Pour permettre un tel mode de fonctionnement (le mode embrayé), le système comporte alors un embrayage, interposé entre les moyens d'entraînement et les pompes principale et secondaire, et des moyens de commande, aptes à placer le système dans un mode dit 'embrayé', en activant l'embrayage. Lesdits moyens pour appliquer la pression de protection de pompe aux orifices principaux de la pompe principale lorsque celle-ci est actionnée mais ne débite pas assurent leur fonction en permanence pendant le mode embrayé.

On comprend par ailleurs que la pompe principale est du type de pompe qui peut être actionnée sans débiter, mais nécessite dans ce cas là qu'au moins une pression minimale prédéterminée soit appliquée à ses orifices principaux. La pompe principale peut être par exemple une pompe rotative, et notamment une pompe à plateau oscillant et pistons axiaux.

La pression de protection de pompe est une pression supérieure ou égale à la pression minimale prédéterminée citée précédemment.

Grâce à l'invention, le dispositif est apte à être opéré dans un mode dit 'sans assistance', dans lequel les pompes principale et auxiliaire sont actionnées, la pression de protection de pompe est appliquée aux orifices principaux de la pompe principale, et la pompe principale est protégée.

On fixe de préférence la pression de protection de pompe à la valeur minimale qui suffit pour protéger la pompe, ou à une valeur proche de celle-ci. La pression de protection de pompe se distingue ainsi de la pression de tarage du limiteur de pression : Cette pression de tarage est fixée à une valeur relativement haute, mais cependant suffisamment basse pour assurer la protection de conduites reliées au limiteur de pression. Le limiteur de pression a ainsi vocation à n'être utilisé qu'exceptionnellement, en cas de hausse de pression anormale dans ces conduites, pour éviter tout dommage dans celles-ci.

A contrario, la pression de protection de pompe est fixée à une valeur relativement faible, par les premiers moyens de restriction, afin que la pompe auxiliaire puisse refouler le fluide à cette pression éventuellement pendant de longues périodes. Grâce à cela, en mode sans assistance, d'une part la pompe principale ne débite pas et sa consommation d'énergie reste minime ; et d'autre part, la consommation de la pompe auxiliaire est également minime, puisque la pression à son orifice de refoulement est fixée à la pression de protection de pompe, qui est relativement faible. Il s'ensuit qu'avantageusement, en mode sans assistance, la consommation d'énergie du dispositif de transmission hydraulique reste faible. Le système hydraulique peut donc être opéré de telle sorte que les pompes principales et auxiliaires soient actionnées en permanence, le fluide étant alors refoulé continûment par la pompe auxiliaire vers le réservoir sans surpression via la conduite de bipasse.

Les premiers moyens de restriction peuvent ainsi par exemple être agencés pour maintenir une pression de protection de pompe inférieure à 20 Bars et de préférence à 10 Bars. La pression de protection de pompe vaut au moins la pression aux orifices principaux de la pompe principale qui suffit pour permettre un fonctionnement de la pompe principale sans dégradation.

Dans un mode de réalisation, le dispositif comporte une valve de bipasse interposée sur la liaison de bipasse et présentant :
- une première position, dans laquelle ladite valve de bipasse permet à la pompe auxiliaire de débiter à travers la liaison de bipasse;
- une deuxième position, dans laquelle ladite valve de bipasse interrompt le flux sur ladite liaison de bipasse et permet le passage de fluide vers ledit au moins un conduit auxiliaire.

La valve de bipasse est ainsi en fait une valve générale d'activation/désactivation du circuit d'assistance. Elle présente d'une part un mode désactivé (correspondant au mode sans assistance du dispositif), dans lequel des fonctions minimales sont assurées par le dispositif, notamment grâce au fait que la pression de gavage (pression à l'orifice de refoulement de la pompe auxiliaire) ou une pression dépendant de la pression de gavage peut être appliquée en différents points sensibles du dispositif, notamment les espaces internes du moteur cité précédemment, pour assurer le maintien en position décrabotée du moteur.

La valve de bipasse présente de plus un mode activé, correspondant au mode assisté du dispositif, dans lequel la pompe de gavage est à même de fournir du fluide sous pression à divers organes du dispositif via des conduits auxiliaires, notamment aux moteurs pour faciliter le crabotage des pistons (sortie des pistons hors de leurs cylindres).

Dans un mode de réalisation, le dispositif comporte :
- deux conduits de pompe reliés aux orifices principaux de la pompe principale, et deux conduits de moteur reliés aux orifices principaux dudit au moins un moteur ; et
- une valve d'activation présentant deux voies amont aptes à être reliées aux deux conduits de pompe, et deux voies aval aptes à être reliées aux deux conduits de moteur ;
ladite valve d'activation présentant une première position dans laquelle les deux voies amont sont reliées respectivement aux deux voies aval, et une deuxième position dans laquelle les deux voies amont sont reliées l'une à l'autre, et les deux voies aval sont reliées l'un à l'autre.

La valve d'activation est la valve qui alimente ledit au moins un moteur d'assistance lorsqu'il est activé (deuxième position), ou l'isole des conduits de pompe (première position).

Dans un mode de réalisation, la valve d'activation comporte en outre une troisième voie amont, apte à être reliée à une source de fluide de mise sous pression ; dans la première position de la valve d'activation, la troisième voie amont est reliée aux deux voies aval et est ainsi apte à être reliée aux deux conduits de moteur ; dans la deuxième position de la valve d'activation, la troisième voie amont est isolée. La liaison établie entre la troisième voie amont et une source de fluide sous pression permet ainsi d'imposer une pression dans les conduits de moteur, ce qui est particulièrement efficace pour faciliter la sortie ou la rentrée des pistons par rapport aux cylindres du moteur.

Cette liaison est donc notamment utilisée pour le remplissage et la vidange des conduits de moteur.

Dans un mode de réalisation, le dispositif comporte une première valve de pilotage, dont une voie de sortie est reliée à une chambre de commande hydraulique commandant la position de la valve d'activation, et une voie d'entrée est susceptible d'être reliée à une source de fluide de pilotage via ladite valve de bipasse, et ladite première valve de pilotage est apte à mettre en relation ou à isoler ladite source de fluide de pilotage et ladite chambre de commande. Cet agencement présente l'intérêt de comporter ainsi en série la valve de bipasse et la première valve de pilotage, dans la ligne de commande de la valve d'activation. Du fait qu'une position spécifique de deux valves est nécessaire pour permettre l'activation de la valve de pilotage, le risque de défaillance accidentelle, et ainsi d'activation intempestive et non désirée du moteur d'assistance est réduite au minimum. Naturellement, il convient d'agencer les valves de bipasse et de pilotage de telle sorte que leurs positions par défaut respectives correspondent à celles dans lesquelles aucune commande d'activation n'est transmise à la valve d'activation.

Comme cela a été indiqué en introduction, comme moteur hydraulique dans les dispositifs d'assistance visés par l'invention, on utilise fréquemment un moteur qui présente :
- un premier conduit de moteur pour son alimentation de fluide et un deuxième conduit de moteur pour l'échappement de fluide du moteur, susceptibles d'être mis en communication avec des cylindres aménagés dans un bloc-cylindres et comprenant des pistons aptes à coulisser dans ces cylindres ;
- un conduit de carter raccordé à un espace interne aménagé à l'intérieur d'un carter contenant le bloc-cylindres ;
ledit moteur est susceptible d'adopter une configuration de travail, dans laquelle les pistons sont susceptibles de générer un couple moteur ou de freinage sous l'effet d'une différence de pression de fluide entre les conduits de moteur, ainsi qu'une configuration dite de roue libre, dans laquelle les pistons sont maintenus en position rentrée à l'intérieur des cylindres et ne génèrent aucun couple.

Dans un mode de réalisation de l'invention utilisant un tel moteur, le dispositif comporte en outre un accumulateur susceptible d'être relié aux deux conduits de moteur, et susceptible d'alimenter le conduit de carter pour la mise sous pression de ce conduit. Le recours à un accumulateur permet de disposer dans le dispositif d'une source de fluide sous pression d'appoint. Avantageusement, l'accumulateur peut notamment être utilisé pour accélérer la rentrée des pistons à l'intérieur des cylindres, en imposant une pression suffisamment importante à l'intérieur de l'espace interne du moteur. Ainsi, dans le dispositif le décrabotage est accéléré ce qui augmente la souplesse d'utilisation du véhicule.

De même, la pression fournie par l'accumulateur peut être transmise aux conduits de moteur, pour accélérer la sortie des pistons. Le même accumulateur peut être utilisé pour favoriser à la fois la sortie et la rentrée des pistons.

Dans un mode de réalisation avantageux, le dispositif est agencé de manière à permettre la vidange de l'accumulateur à travers une restriction. Aussi, la vidange de l'accumulateur nécessite un certain temps, non nul, pendant lequel la pression au voisinage de l'accumulateur décroît seulement très progressivement. Avec cet agencement spécifique (notamment), la mise en relation entre l'accumulateur et les conduits de carter peut se faire au cours d'une opération de vidange de l'accumulateur.

Par ailleurs, l'utilisation d'un accumulateur peut présenter certains risques, notamment si l'accumulateur reste sous pression pendant l'utilisation du véhicule, notamment pendant de longues périodes et en mode sans assistance sur route.

Pour réduire ce risque, dans un mode préféré de réalisation le dispositif comprend en outre une valve d'accumulateur dont une voie est reliée à l'accumulateur, et présentant une première position dans laquelle elle relie celui-ci à une source de fluide de remplissage, et une deuxième position dans laquelle elle les isole. La valve d'accumulateur apporte une souplesse importante dans la gestion de l'accumulateur, notamment en vue de ne mettre celui-ci sous pression que pendant les moments pendant lesquels il est nécessaire. L'accumulateur est alors relié à la source de fluide de remplissage pendant une durée suffisante, juste avant sa phase d'utilisation. C'est en particulier le cas au moment du passage en mode assisté, pour lequel la pression de l'accumulateur est utilisée pour faciliter et accélérer la sortie des pistons hors des cylindres. Inversement, lorsque le véhicule roule à haute vitesse ou est à l'arrêt, l'accumulateur avantageusement peut rester vide.

Dans le cas où le dispositif comporte un accumulateur, et une valve d'accumulateur telle que celle présentée précédemment, dans un mode de réalisation la valve de bipasse et la valve d'accumulateur sont couplées, c'est-à-dire que lorsque la valve de bipasse est en première position, la valve d'accumulateur est en première position, et lorsque la valve de bipasse est en deuxième position, la valve d'accumulateur est en deuxième position.

L'avantage de cet agencement est qu'il permet en première position de la valve de bipasse de mettre sous pression l'accumulateur et le conduit auxiliaire, donc de permettre l'utilisation de l'accumulateur en mode assisté. Inversement en deuxième position, l'utilisation de l'accumulateur n'est pas possible, et est donc proscrite en mode sans assistance, ce qui apporte une sécurité dans l'utilisation du dispositif.

Pour réaliser le couplage entre les valves de bipasse et d'accumulateur, dans un mode de réalisation, la valve d'accumulateur comporte une chambre de commande hydraulique, qui est reliée à une voie de la valve de bipasse permettant le pilotage de la valve d'accumulateur par la valve de bipasse. Ainsi la valve de bipasse est apte à placer l'accumulateur en mode 'sous pression' (l'accumulateur étant relié à la pompe auxiliaire ou de gavage) pendant le mode assisté, et à laisser l'accumulateur à pression nulle pendant le mode sans assistance.

Dans un mode de réalisation, une desdites pompes principale et auxiliaire est apte à être reliée à l'accumulateur lorsque ce dernier est relié aux conduits de moteur pour la mise sous pression de ceux-ci. Les conduits de moteur sont alors reliés à la fois à l'une des pompes, et à l'accumulateur, pendant la phase de mise sous pression. Cela permet d'accélérer le remplissage de fluide et la mise sous pression des conduits de moteur, au moment de l'activation du dispositif de transmission.

Dans un mode de réalisation, le dispositif comporte en outre de deuxièmes moyens de restriction, agencés sur la liaison de bipasse et aptes à maintenir une pression de protection de moteur, inférieure à la pression de protection de pompe, dans une partie de protection de moteur de la liaison de bipasse ; et le moteur présente un espace interne aménagé à l'intérieur d'un carter contenant le bloc-cylindres, auquel ladite partie de protection de moteur est susceptible d'être reliée. Cette disposition est prévue pour le mode sans assistance. Dans ce mode, le fluide délivré par la pompe auxiliaire circule à travers la liaison de bipasse. Dans ces conditions, les deuxièmes moyens de restriction maintiennent dans une partie de cette liaison dite 'liaison de protection de pompe', une pression dite 'pression de protection de moteur' qui est en général bien plus faible que la pression de protection de pompe, et est suffisante pour protéger le (ou les) moteur(s). Par exemple, pour des moteurs décrabotables tels que présentés précédemment, la pression de protection de moteur est simplement la pression suffisante pour maintenir les pistons en position rentrée dans les cylindres, soit de l'ordre de 0,5 Bar habituellement.

Dans un mode de réalisation, les premiers moyens de restriction comportent un premier clapet, taré à la pression de protection de pompe, et les deuxièmes moyens de restriction comportent en outre un deuxième clapet, taré à la pression de protection de moteur, ledit premier clapet et ledit deuxième clapet étant agencés en série sur la liaison de bipasse.

Dans un mode de réalisation, les moyens d'entraînement comportent un moteur à combustion interne, à une sortie de puissance duquel les pompes principale et auxiliaire sont couplées de manière permanente, c'est-à-dire sans embrayage.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1A est un schéma générique représentant un véhicule sur lequel est monté un système selon l'invention ;
- la figure 1B est une vue de détail, illustrant une variante du système de la figure 1A, dans laquelle un embrayage est disposé entre le moteur et les pompes ;
- la figure 2 est un diagramme représentant les différentes phases de mise en oeuvre du dispositif de transmission hydraulique du système de la figure 1A, en fonction du temps ;
- les figures 3 à 5 sont des schémas représentant le système de la figure 1A, en mode sans assistance :
   o la figure 3 est un schéma représentant le système de la figure 1A, en mode roue libre et pendant l'étape de rentrée des pistons ;
   o la figure 4 est un schéma représentant le système de la figure 1A, pendant l'étape de sortie des pistons ;
   o la figure 5 est un schéma représentant le système de la figure 1A, en mode assisté ;

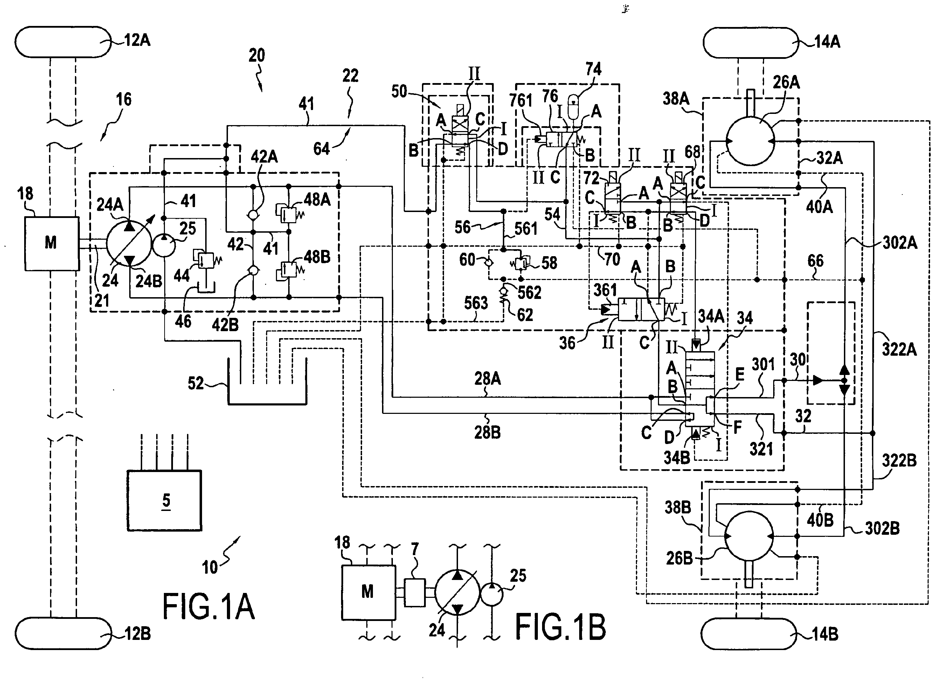

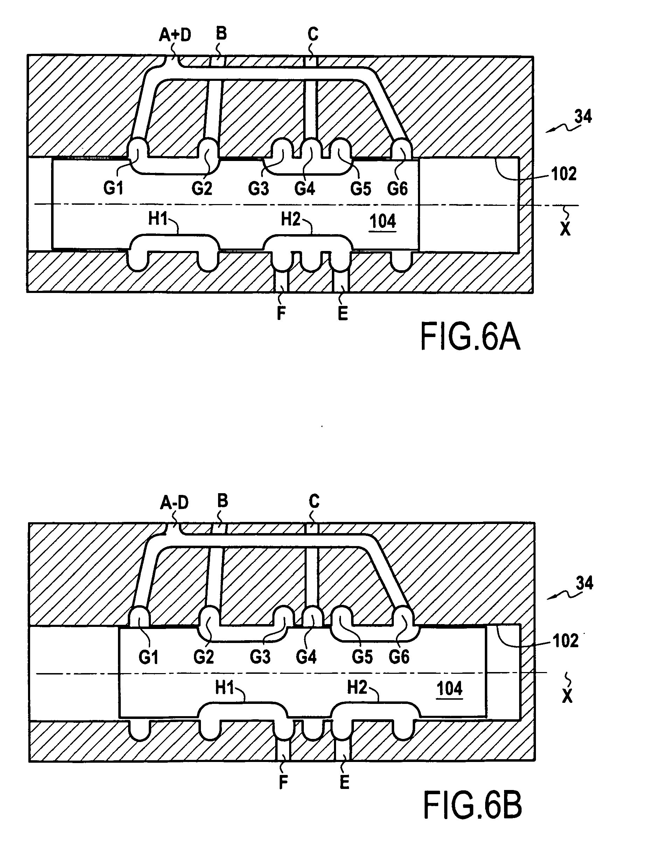

- les figures 6A et 6B sont des coupes schématiques axiales de la valve d'activation du système de la figure 1A.

La figure 1A représente un véhicule 10 sur lequel est monté un dispositif de transmission hydraulique 22 faisant partie d'un système de transmission selon l'invention.

Le véhicule 10 est un véhicule à quatre roues, à savoir deux roues arrière 12A 12B, et deux roues avant 14A 14B. L'entraînement du véhicule est assuré principalement par une transmission principale 16. Celle-ci comporte un moteur diesel 18 (moyens d'entraînement au sens de l'invention), lié aux roues arrière 12A et 12B, qui assure l'entraînement du véhicule dans un mode d'avance normale de celui-ci.

De plus, pour assurer la propulsion du véhicule même dans des conditions de route difficiles (route en pente ou déclive, route glissante, etc.), le véhicule comporte également une transmission auxiliaire 20. Celle-ci permet de rendre motrices les deux roues 14A et 14B, qui ne sont pas motrices pendant le mode d'avance normal du véhicule. Ainsi grâce à la transmission auxiliaire 20, le véhicule dispose d'un mode assisté, dans lequel les quatre roues 12A, 12B, 14A et 14B sont motrices.

La transmission auxiliaire 20 est couplée à un arbre 21 qui est la sortie de puissance du moteur 18, duquel elle tire l'énergie qu'elle transmet aux roues 14A, 14B lorsqu'elle est activée.

La transmission auxiliaire 20 est constituée par un dispositif de transmission hydraulique 22, qui transmet une partie de l'énergie du moteur 18 aux roues 14A, 14B, et assure de plus différentes fonctions complémentaires : activation/désactivation de la transmission auxiliaire ; mise en sécurité des organes de la transmission auxiliaire pendant le mode désactivé, etc.

Pour l'entraînement des roues 14A, 14B, le dispositif de transmission hydraulique 22 comporte tout d'abord deux sources de fluide sous pression : une pompe principale 24, et une pompe auxiliaire 25, prévue pour maintenir une pression de fluide minimale dans différents conduits auxiliaires du dispositif.

La pompe principale 24 est une pompe réversible à débit variable à plateau oscillant.

Les pompes principale 24 et auxiliaire 25 sont reliées toutes les deux directement à l'arbre de sortie 21 du moteur 18, c'est-à-dire sans embrayage. Elles sont donc susceptibles d'être actionnées conjointement par le moteur 18, c'est-à-dire que les deux pompes peuvent être entraînées toutes les deux à un même instant.

La pompe principale 24 est prévue pour alimenter en fluide sous pression deux moteurs hydrauliques 26A, 26B attelés respectivement aux deux roues 14A, 14B. Pour cela, la pompe 24 présente deux conduits de pompe 28A, 28B, reliés à ses orifices principaux 24A, 24B.

Ces orifices peuvent être mis en communication respectivement avec deux conduits de moteur 30, 32. Chacun de ces conduits de moteur a une première partie 301, 321 apte à être reliée à un conduit de pompe, et une deuxième partie dans laquelle il se divise en deux branches 302A,302B,322A,322B, reliées respectivement à des enceintes d'alimentation et d'échappement des moteurs 26A et 26B.

De manière connue en soi, les moteurs 26A, 26B sont des moteurs hydrauliques à pistons radiaux, comprenant chacun un bloc-cylindres, dans lequel sont aménagés des cylindres contenant des pistons. Les pistons peuvent être décrabotés et prendre une position rentrée à l'intérieur des cylindres, dans laquelle ils ne délivrent aucun couple, ou prendre une position crabotée, dans laquelle ils sont sortis (partiellement) des cylindres et prennent appui sur une came ondulée qui transforme leurs efforts radiaux en couple moteur. De tels moteurs sont par exemple décrits dans le brevet français n° 2 504 987.

Chacun des moteurs 26A, 26B comporte un arbre de sortie, attelé respectivement aux roues 14A, 14B. Sous l'effet de la différence de pression imposée par la pompe principales entre les conduits de pompe, et donc entre les conduits de moteur, en mode assisté les moteurs 26A et 26B délivrent un couple moteur (ou de freinage) qui leur permet d'entraîner les roues 14A, 14B.

Entre les conduits de pompe 28A, 28B et les conduits de moteur 30, 32 est interposée une valve d'activation 34. Celle-ci présente quatre voies amont A, B, C, D, deux voies 'aval' E et F, deux positions I, II, deux chambres hydrauliques de commande 34A, 34B. Dans ce texte, les termes 'amont' et 'aval' appliqués aux voies d'une valve désignent en général le sens le plus fréquent de circulation du fluide ou de transmission d'une commande, sans que cela n'exclue d'autres modes de fonctionnement.

Les voies A et D sont reliées au conduit de pompe 28A. La voie C est reliée au conduit de pompe 28B. Les voies E et F sont reliées aux conduits de moteur 30 et 32. La voie B est reliée à une valve de commande de pression 36.

La valve d'activation 34 comporte également un ressort de rappel qui tend à la maintenir dans la première position I.

Dans la première position I, la voie A est isolée, la voie B est reliée aux voies E et F, et les voies C et D sont reliées.

Dans la deuxième position II, les voies B et D sont isolées, les voies A et E d'une part, C et F d'autre part, sont reliées respectivement (les voies A et D restant reliées l'une à l'autre ainsi qu'à la conduite de pompe 28A).

Ainsi, en première position I, les conduits de pompe 28A, 28B sont reliés l'un à l'autre (position de bipasse) ; la pompe est alors réglée sur un débit nul. Par ailleurs, les conduits de moteur sont reliés l'un à l'autre, et leur pression est celle qui leur est imposée par la valve de commande de pression 36, d'une manière qui sera présentée plus loin.

En deuxième position II en revanche, les conduits de moteurs sont reliés aux conduits de pompe et alimentent les moteurs 26A, 26B pour qu'ils entraînent les roues 14A, 14B, ce qui constitue le mode assisté du dispositif.

En outre, chacun des moteurs 26A, 26B présente un carter 38A, 38B, dans lequel se trouve son bloc-cylindres. A l'intérieur de ce carter est aménagé un espace interne, auquel est relié un conduit pour le retour de fuites dit conduit de carter (références 40A, 40B), relié à un réservoir sans surpression de manière détaillée plus loin.

L'orifice de refoulement de la pompe auxiliaire 25 est relié à un conduit de gavage 41.

Le conduit 41 est relié aux conduits de pompe 28A, 28B via des clapets anti-retour 42A, 42B. Cette liaison permet d'assurer que la pression dans les conduits de pompe reste à tout moment au niveau de la pression de gavage (pression à l'orifice de refoulement de la pompe 25).

D'autre part, le conduit 41 est relié à un réservoir sans surpression 46, qui est à la pression atmosphérique, via un limiteur de pression 44, ce qui empêche une hausse de pression excessive dans la conduite 41.

De même, les conduits de pompe 28A, 28B sont reliés à la conduite 41 via des limiteurs de pression 48A, 48B, également afin d'éviter toute surpression.

Une électrovalve dite valve de bipasse 50 est disposée sur le conduit de gavage. Celle-ci présente deux voies amont A, B, deux voies aval C et D, et deux positions I, II.

La voie A est reliée à un réservoir sans surpression 52 (qui peut être le même que le réservoir 46). La voie B est reliée à une extrémité du conduit de gavage 41. La voie C est reliée à un conduit 54 dite 'conduit de transmission' dont le rôle va être détaillé plus loin. La voie D est reliée à un conduit 56 dit 'conduit de bipasse'.

La valve de bipasse 50 comporte également un ressort de rappel qui tend à la maintenir dans la première position I.

Dans la première position I, les voies A et C sont reliées, et les voies B et D sont reliées.

Dans la deuxième position II, les voies A et D sont reliées, et les voies B et C sont reliées.

La première position I est la position par défaut pour la valve de bipasse 50 et est la position 'désactivée', correspondant au mode sans assistance (avance normale). Dans cette position, le fluide provenant de la pompe de gavage est dirigé vers le conduit de gavage 56, et le conduit de transmission 54 est maintenu à pression nulle (ce qui signifie dans ce document, pression atmosphérique).

La deuxième position II de la valve de bipasse est le mode activé du dispositif de transmission 22, qui correspond au mode 'assisté' pour le véhicule. Dans cette deuxième position, la valve de bipasse dirige le flux de la pompe de gavage vers le conduit de transmission 54, qui est un conduit auxiliaire du dispositif 22.

Le conduit de bipasse 56 présente trois parties amont 561, médiane 562 et aval 563.

Les parties amont 561 et médiane 562 sont reliées via un limiteur de pression 58 et un clapet anti-retour 60 montés en parallèle. Le clapet anti-retour est monté dans le sens qui empêche le déplacement du fluide vers la partie médiane 562.

Le limiteur de pression 58, est commandé par sa pression amont, et permet de maintenir dans la partie amont 561 une pression minimale, choisie égale à 10 Bar.

Les parties médiane 562 et aval 563 sont reliées via un clapet taré 62. Celui-ci garantit le maintien d'une pression minimale dans la partie médiane, choisie égale à 0,5 Bar.

Le conduit de gavage 41 associé au conduit de bipasse 56 forment une liaison dite liaison de bipasse 64. Celle-ci relie donc l'orifice de refoulement de la pompe auxiliaire 25 et le réservoir sans surpression 52.

Comme on l'a vu, le conduit de gavage 41 est relié aux conduits de pompe 28A et 28B (via les clapets 42A,42B).

Aussi en mode assisté (valve 50 en position I), la pression de 10Bar (10,5 Bar plus précisément) maintenue par le limiteur de pression 58 dans la partie amont de la liaison de bipasse (regroupant le conduit de gavage 41 et la partie amont 561 du conduit de bipasse) s'applique dans les conduits de pompe ; grâce à quoi la pompe est protégée. La pression maintenue par le limiteur 58 est donc dite pression de protection de pompe, et la partie amont de la liaison de bipasse, partie de protection de pompe.

La partie médiane 562 du conduit de bipasse 56 est reliée par un conduit 66 aux conduits de carter 40A et 40B. Aussi, la pression dans les conduits de carter reste à tout moment au plus égale à 0,5 Bar (pression de tarage du clapet 62). Cependant, de manière transitoire la pression peut monter davantage dans cette partie médiane 562, du fait que le débit maximal que le clapet 62 peut évacuer est relativement limité. Cette propriété est exploitée dans le circuit d'une manière qui sera détaillée plus loin.

La valve d'activation 34 est pilotée par une première valve de pilotage 68.

Celle-ci est une électrovalve présentant deux voies amont A, B, et deux voies aval C, D, et deux positions, I, II.

La voie A est reliée au conduit de transmission 54. On comprend que celui-ci transmet une pression de gavage que la première valve de pilotage 68 peut utiliser pour piloter la valve d'activation. La voie B est reliée à un conduit d'évacuation 70 lui-même relié au réservoir sans surpression 52. La voie C est reliée à la chambre hydraulique 34B de la valve 34, dont la montée en pression tend à faire passer la valve d'activation 34 dans sa première position (mode sans assistance) ; la voie D est reliée à l'autre chambre 34A de la valve 34, dont la montée en pression au contraire tend à faire passer la valve 34 dans sa deuxième position (mode assisté).

La première valve de pilotage 68 comporte également un ressort de rappel qui tend à la maintenir dans la première position I.

Dans la première position I, les voies A et C sont reliées, et les voies B et D sont reliées ; et dans la deuxième position II, les voies A et D sont reliées, et les voies B et C sont reliées.

Comme la première valve de pilotage 68 est située en aval de la valve de bipasse 50, elle ne joue un rôle actif que lorsque la valve de bipasse est en position II, et qu'ainsi la pression de gavage règne dans le conduit de transmission 54.

Dans ces conditions, une action sur la valve 68 permet de faire passer la valve d'activation en position I ou II, suivant que la valve de pilotage est elle-même placée en position I ou II. En effet, en position I de la première valve de pilotage 68, la pression de gavage est transmise dans la chambre 34A, et la pression nulle maintenue dans la chambre 34B, de telle sorte que la valve d'activation 34 se place en position I (mode sans assistance) ; et inversement.

Le dispositif 22 comporte en outre une deuxième valve de pilotage 72, qui pilote la valve de commande de pression 36.

Précisons d'abord l'agencement de la valve hydraulique 36. Celle-ci comporte deux voies amont A et B, une voie aval C, et une chambre de commande hydraulique 361. La voie C de la valve 36 est reliée à la voie B de la valve d'activation 34.

La valve 36 présente deux positions I et II.

Dans la première position I, les voies A et C sont reliées, et la voie B est isolée. Dans la deuxième position II, les voies B et C sont reliées, et la voie A est isolée.

La valve 36 comporte également un ressort de rappel qui tend à la maintenir dans la première position I.

La deuxième valve de pilotage 72 est une électrovalve présentant deux voies amont A et B, et une voie aval C.

Les voies A et B sont reliées respectivement au conduit de transmission 54, et au conduit d'évacuation 70. La voie C est reliée à la chambre de commande hydraulique 361 de la valve de commande de pression 36.

La deuxième valve de pilotage 72 comporte également un ressort de rappel qui tend à la maintenir dans la première position I.

Dans sa première position I, la deuxième valve de pilotage 72 relie les voies B et C, A restant isolée. Dans la deuxième position II, la deuxième valve de pilotage 72 relie les voies A et C, B restant isolée.

Comme pour la première valve de pilotage, les valves 36 et 72 ne jouent de rôle actif que pendant les phases d'assistance, c'est-à-dire ici lorsque la valve de bipasse 50 est placée en position II. La pression de gavage règne alors dans le conduit de transmission 54 (relié à la voie A de la valve 72), alors qu'une pression nulle règne dans le conduit d'évacuation 70 (relié à la voie B de la valve 72).

Dans ces conditions, la valve 72 permet d'appliquer soit la pression de gavage soit une pression nulle dans la chambre de commande hydraulique 361 de la valve 36, selon qu'elle est placée dans sa première ou sa deuxième position. La pression dans la chambre 361 impose à la valve 36 de prendre sa première position I, si la valve 72 est dans sa première position I, ou sa deuxième position, si la valve 72 est dans sa deuxième position II.

Cet agencement permet donc de sélectionner la pression que l'on veut appliquer à la voie B de la valve d'activation 34. Quand celle-ci est dans sa première position I, la pression dans la voie B est transmise aux conduits de moteur 30, 32 (En revanche dans la deuxième position II de la valve d'activation, la voie B est isolée).

Enfin, le dispositif 22 comporte une source de fluide sous pression additionnelle, à savoir un accumulateur de fluide 74, dont le fonctionnement est régulé par une valve d'accumulateur 76, disposée sur un conduit d'accumulateur qui relie l'accumulateur 74 au reste du dispositif.

La valve d'accumulateur 76 comporte une voie amont A, deux voies aval B et C, et une chambre de commande hydraulique 761. La voie A est reliée à l'accumulateur. La voie B est reliée à la partie médiane 562 du conduit de bipasse 56, via le conduit 66. La voie C est reliée au conduit de transmission 54.

La valve d'accumulateur 76 peut occuper une première position I, dans laquelle les voies A et C sont reliées, et la voie B est isolée ; et une deuxième position II, dans laquelle les voies A et B sont reliées, et la voie C est isolée.

La valve d'accumulateur 76 comporte un ressort de rappel qui tend à la faire revenir dans sa première position I.

La chambre de commande 761 de la valve d'accumulateur 76 est reliée à la partie amont 561 du conduit de bipasse 56. Il résulte de cette liaison que :
- Si la valve de bipasse 50 est en position I (mode sans assistance), la pression de gavage (dont la valeur dans ce mode est fixée à une valeur dite 'de protection de pompe') s'applique dans la chambre hydraulique 761 et ainsi, la valve d'accumulateur se place dans la position II, dans laquelle l'accumulateur est relié à la partie médiane de la liaison de bipasse, maintenue à une pression de 0,5 Bar (pression de protection de moteur). Ainsi, l'accumulateur n'est pas réellement mis sous pression et ne présente aucun danger ; en revanche,
- Si la valve de bipasse 50 est en position II (mode assisté), une pression nulle est appliquée dans la chambre hydraulique 761. La valve d'accumulateur se place en position I, c'est-à-dire que l'accumulateur est relié au conduit de transmission 54.

Du fait de la liaison entre la voie D de la valve de bipasse et la chambre de commande hydraulique 761, la valve d'accumulateur et la valve de bipasse sont couplées, et la position de la valve de bipasse impose sa position à la valve d'accumulateur.

Le mode opératoire du dispositif de transmission hydraulique 22 va maintenant être présenté.

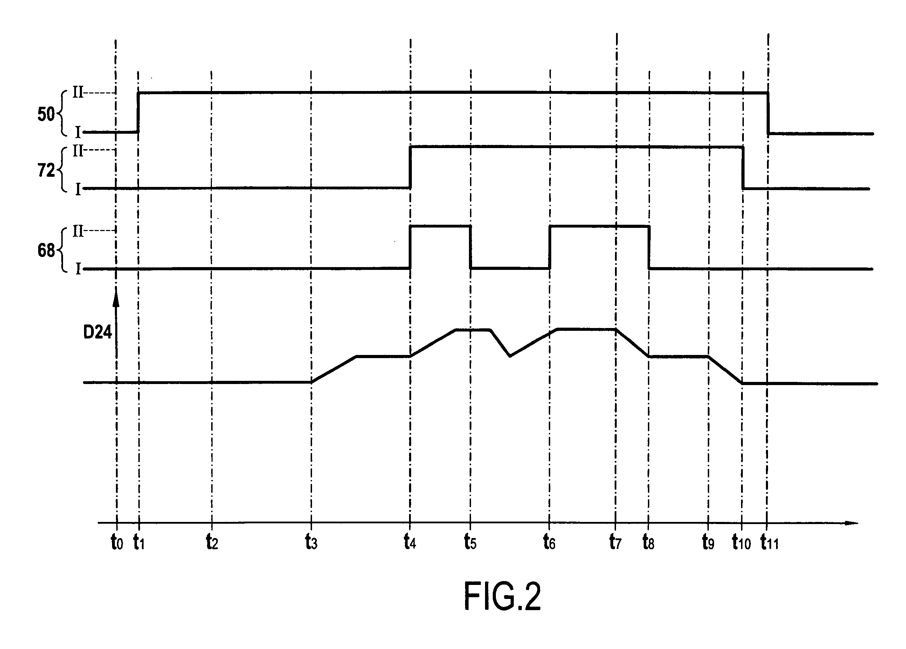

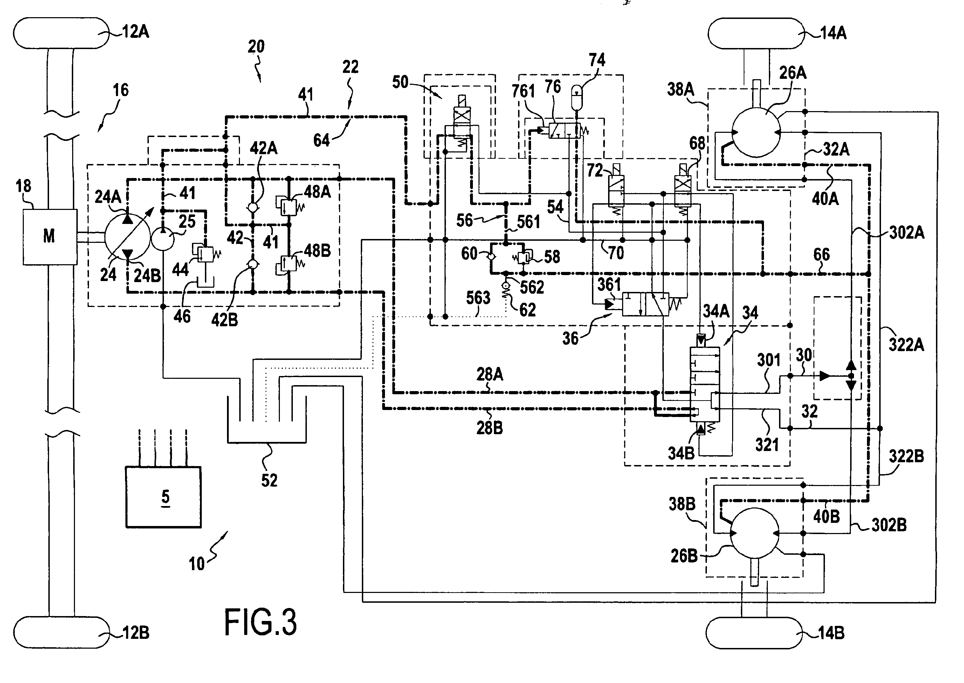

Le dispositif de transmission hydraulique 22 est utilisé en respectant certaines étapes marquées principalement par les actions d'activation ou désactivation des différentes valves. La séquence de passage du mode sans assistance au mode assisté, et vice-versa, est présentée par la figure 2. Certaines étapes significatives de cette séquence sont illustrées par les figures 3 à 5.

L'enchaînement de ces différentes étapes est piloté de manière automatique, à partir de la demande d'activation (ou respectivement de désactivation) de l'assistance par le conducteur du véhicule, par une unité de commande électronique ou ECU 5. Cette unité de commande 5 est représentée notamment sur la figure 1A, sur laquelle cependant les connexions entre l'unité de commande 5 et les organes de commande du système de transmission ne sont pas représentées. Cette unité de commande 5 est à même de prendre certaines mesures de protection du dispositif de transmission hydraulique 22, lorsque certaines actions sont réalisées par le chauffeur, comme un changement de vitesse ou un freinage, comme cela est décrit plus loin.

Par ailleurs, un autre mode de réalisation de l'invention, voisin du système de la figure 1A, peut être réalisé. Dans cet autre mode de réalisation, le système de transmission est entièrement identique au système représenté sur la figure 1A, à l'exception du détail représenté sur la figure 1B. Dans cet autre mode de réalisation, le système de transmission inclut en effet un embrayage 7 agencé entre le moteur 18 et les pompes 24 et 25, et l'unité de commande 5 est agencée pour placer le système de transmission dans le mode de fonctionnement 'embrayé' cité précédemment, c'est-à-dire qu'elle permet d'activer ou de désactiver l'embrayage. En mode embrayé, les moyens pour appliquer la pression de protection de pompe aux orifices principaux de la pompe principale lorsque celle-ci est actionnée mais ne débite pas assurent leur fonction en permanence, de la manière qui va maintenant être décrite, et qui est identique pour le système de la figure 1A et celui de la figure 1B.

La figure 2 présente, en fonction du temps, la position adoptée par la première valve de bipasse 50, et les première et deuxième valves de pilotage 21 et 23. En dessous est fournie la courbe des variations de la cylindrée D24 de la pompe principale 24.

Le temps est indiqué en abscisse, avec notamment des instants significatifs t0 à t11. Le diagramme présente un scénario fictif d'utilisation du dispositif 22, dans lequel à partir du mode sans assistance, à un instant t0 une commande d'activation de l'assistance est effectuée par le conducteur du véhicule. Une première phase de préparation de l'assistance a lieu entre t0 et un instant t4. A partir de cet instant t4, l'assistance est active jusqu'à un instant t7. Cependant, le scénario de la figure 2 prévoit une phase de débrayage momentané de l'assistance entre les instants t5 et t6. Enfin, à un instant t7 la demande de désengagement de l'assistance est effectuée par le conducteur, et le dispositif d'assistance hydraulique passe du mode assisté au mode sans assistance entre les instants t7 à t11.

### LE MODE SANS ASSISTANCE (figure 3)

Dans ce mode, la valve de bipasse est en position I, et le fluide délivré par la pompe de gavage 25 circule suivant la liaison de bipasse 64 pour retourner au réservoir 52 en suivant ainsi un circuit relativement court, sans solliciter les diverses valves du dispositif 22 (à l'exception de la valve de bipasse 50). La valve d'accumulateur 76 est en position II. L'accumulateur se vide via le clapet 62 de la liaison de bipasse. Les valves d'activation 34, de pilotage 68 et 72, de commande de pression 36 sont en position I. La pression de protection de pompe règne dans la partie amont de la liaison de bipasse 64, et par suite dans les conduits de pompe, ce qui permet de protéger la pompe principale 24. Celle-ci est entraînée par le moteur 18, mais ne débite pas.

Comme la pression de protection de pompe est peu élevée (10 Bar), la consommation d'énergie par la pompe auxiliaire 25 ou pompe de gavage reste très modérée.

Les conduits de carter 40A et 40B sont reliés à la partie médiane 562 du conduit de bipasse, dans laquelle règne une pression de 0,5 Bar. Cette pression est suffisante (et choisie dans ce but) pour garantir que les pistons demeurent en position rentrée à l'intérieur des cylindres.

### PASSAGE EN MODE ASSISTE

### Activation de la valve de bipasse

A l'instant t0, le conducteur envoie une commande d'assistance pour passer la transmission du véhicule en mode assisté, c'est-à-dire pour activer la transmission auxiliaire 20.

Après un bref intervalle, à un instant t1 l'unité de contrôle électronique ECU active la valve de bipasse 50 et la place en position II.

La valve d'accumulateur 76 réagit immédiatement et passe de la position II à la position I. L'accumulateur se trouve donc relié à la pompe de gavage via le conduit de gavage et le conduit de transmission 54. Il se remplit et atteint rapidement la pression délivrée par la pompe de gavage. Inversement, le conduits de carter 40A, 40B se vident dans le réservoir 52, via le clapet 60 et la valve 50.

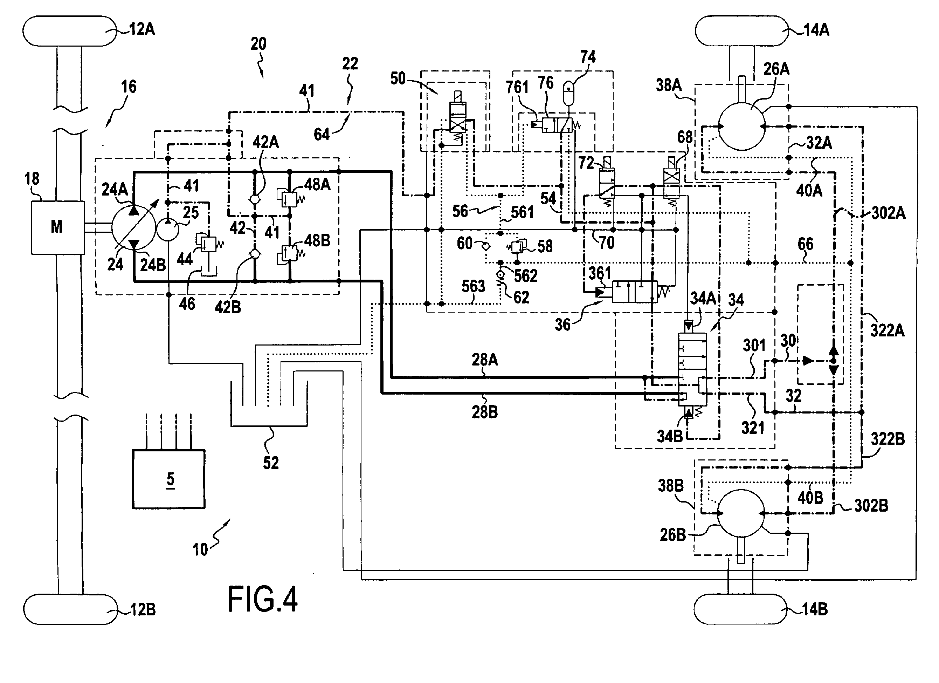

### Synchronisation de la pompe et sortie des pistons (figure 4)

L'accumulateur est plein à un instant t2. L'ECU déclenche alors à un instant t3 la synchronisation de la pompe principale 24, en augmentant progressivement la cylindrée de la pompe, jusqu'à une valeur cible à laquelle la cylindrée est stabilisée. Cette valeur cible est déterminée par l'ECU de manière à ce que la pompe entraîne les moteurs 26A et 26B à une vitesse de rotation égale à celle des roues du véhicule. L'instant t3 est déterminé par l'ECU soit après un délai fixe après t2 (0,5 seconde), soit par une pression atteinte sur un manocontact.

Les pistons, qui étaient jusque là rentrés à l'intérieur des cylindres, sont alors sortis de leurs cylindres à un instant t4, et placés en position de travail, c'est-à-dire en contact avec la came. Cette opération est déclenchée en activant la deuxième valve de pilotage 72, qui passe en position II. Il s'ensuit que la pression de gavage s'applique dans la chambre hydraulique 361, ce qui fait passer la valve de commande de pression 36 en position II. Par suite, la pression appliquée dans la voie B de la valve d'activation 34 et donc dans les conduits de moteur 30,32 s'élève, et atteint la pression de gavage.

Sous l'effet de cette pression, et comme inversement les conduits de carter 40A,40B restent à pression nulle, les pistons sortent de leurs cylindres, ce qui permet que les rotors des moteurs tournent à la même vitesse que les roues, le débit de la pompe s'adaptant à cette vitesse. A ce stade, les moteurs ne délivrent cependant aucun couple.

Simultanément à la sortie des pistons hors des cylindres, les conduits de carter 40A,40B qui sont reliés à la partie médiane 562 du conduit de bipasse 56, évacuent le fluide de l'espace interne des moteurs 26A, 26B via le clapet anti-retour 60, vers le réservoir 52.

Avantageusement pendant cette phase, l'accumulateur 74 est mis en ligne en même temps que la pompe de gavage 25 pour fournir du fluide et remplir les conduits de moteur 30 et 32. L'accumulateur facilite et accélère donc le remplissage et la montée en pression des conduits de moteur, et permet donc un crabotage rapide des moteurs 26A, 26B.

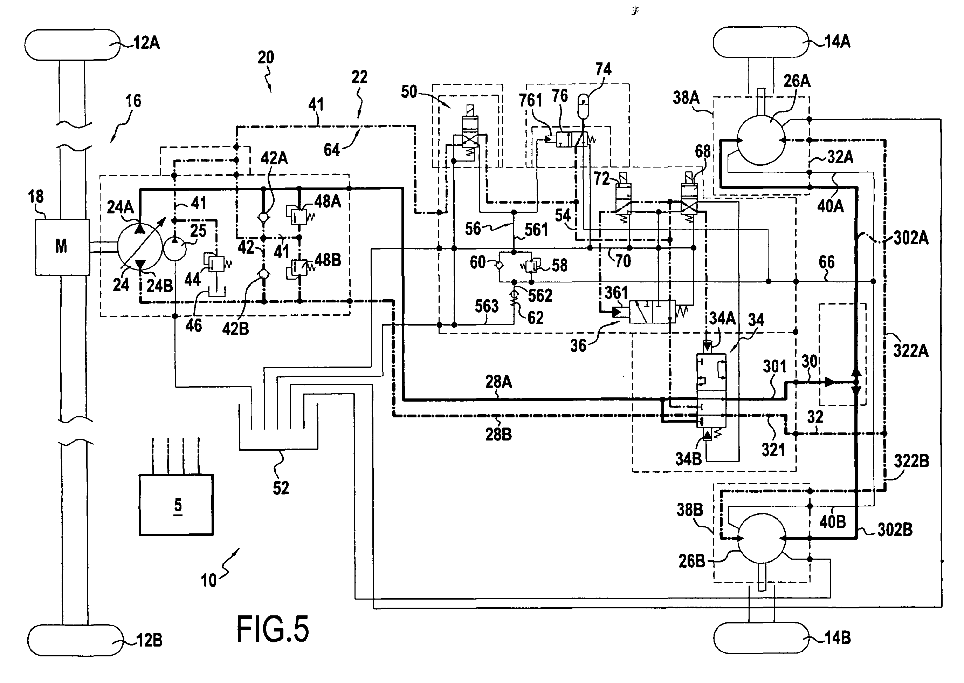

### Activation des moteurs d'assistance (figure 5)

Soit légèrement après l'étape de synchronisation de la pompe, soit simultanément comme cela est représenté sur la figure 2, les moteurs d'assistance sont activés en plaçant la première valve de pilotage 68 en deuxième position II. Cela fait passer la valve d'activation 34 en position II et ainsi, les pressions respectives des conduits de pompe 28A, 28B s'appliquent dans les conduits de moteur 30, 32. Sous l'effet de la différence de pression entre ces conduits, les moteurs 26A et 26B sont amenés à fonctionner et entraînent les roues 14A et 14B qui deviennent ainsi motrices.

Le débit de la pompe est alors progressivement augmenté, au fur et à mesure que la vitesse du véhicule s'accroît.

Pendant la phase d'assistance, l'accumulateur 74 est relié au conduit de transmission 54 et reste soumis à la pression de gavage.

### DESACTIVATION TEMPORAIRE DE L'ASSISTANCE

Si pendant une phase d'assistance, il est nécessaire par exemple de freiner ou de changer de vitesse (sur les moteurs 26A, 26B), le dispositif d'assistance 22 est désactivé temporairement pendant cette phase.

Cette opération est réalisée (voir figure 2) entre les instants t5 et t6, période pendant laquelle la deuxième valve de pilotage 68 est placée temporairement en position I (position désactivée). Il s'ensuit que pendant cette période la valve d'activation 34 revient elle aussi en position I et qu'ainsi, la pression s'égalise entre les conduits de moteur. Les moteurs 26A et 26B ne délivrent alors plus temporairement de couple moteur ou de freinage.

### RETOUR AU MODE SANS ASSISTANCE

Le retour au mode sans assistance se fait de la manière suivante :
A un instant t7, le conducteur du véhicule transmet une commande de retour au mode sans assistance à l'unité de contrôle électronique. Celle-ci réduit progressivement le débit de la pompe principale 24, afin de réduire la pression d'assistance au minimum (à 30 Bar) afin de réduire les chocs éventuels dans les moteurs d'assistance.
Ensuite, après un laps de temps prédéterminé, les moteurs 26A, 26B sont désactivés en faisant repasser la première valve de pilotage 68 en position I, ce qui entraîne le passage de la valve d'activation 34 en position I. La cylindrée de la pompe est alors maintenue constante pendant un court laps de temps (entre les instants t8 et t9), puis on reprend la réduction du débit de la pompe entre les instants t9 et t10, ce dernier étant celui auquel la pompe retrouve un débit nul.
A cet instant t10, la deuxième valve de pilotage 72 est désactivée, ce qui a pour effet de permettre l'évacuation du fluide contenu dans ces conduits de moteur vers le réservoir 52, et de faire chuter la pression dans ceux-ci.
Ensuite, la valve de bipasse 50 elle-même est désactivée à un instant t11. Les valves sont alors dans les positions illustrées par la figure 3. Cependant, dans un premier temps, les flux de fluide sont tout à fait différents du mode non assisté, notamment du fait que l'accumulateur est initialement sous pression (à la pression de gavage).
Le fluide délivré par la pompe de gavage est à nouveau dirigé vers le conduit de bipasse 56. Par ailleurs, la désactivation de la valve 50 fait passer immédiatement la valve d'accumulateur 76 en position II. L'accumulateur est alors mis en relation d'une part avec les conduits de carter 40A, 40B via le conduit 66, et d'autre part avec le réservoir 52, via le clapet taré 62.
Or, le débit de fluide qui est susceptible de traverser ce clapet 62 est limité. Aussi, lorsque l'accumulateur 74 est mis en relation avec le conduit 66, l'essentiel du fluide qu'il contient est évacué vers le réservoir 52, mais pendant les premiers instants après la mise en relation de l'accumulateur 74 et du conduit 66, une pression non négligeable s'établit dans ces conduits. Cette même pression est transmise à l'espace interne aux moteurs 26A, 26B via les conduits de carter 40A, 40B. Aussi, la mise en relation de l'accumulateur permet d'accélérer la rentrée des pistons dans les cylindres.
A l'issue de ces opérations, le véhicule se retrouve en mode sans assistance, et les roues 14A et 14B peuvent tourner librement, comme dans la situation initiale.
On notera qu'il est également possible de désactiver d'abord la valve de bipasse 50, puis la deuxième valve de pilotage 72. Le choix d'une telle séquence favorise la rétractation rapide des pistons.
L'agencement de la valve 34 va maintenant être présenté en relation avec les figures 6A et 6B.
Cette valve comporte un corps 100 à l'intérieur duquel est aménagé un alésage 102 sensiblement cylindrique suivant un axe X. Dans cet alésage coulisse un tiroir 104 ayant sensiblement la forme d'un tronçon cylindrique. Dans l'alésage sont formées en outre six gorges circonférentielles G1-G6 ; à la surface extérieure du tiroir sont formées deux gorges circonférentielles larges H1-H2.
La valve 34 comporte quatre voies amont A,B,C et D dont deux (A et D) sont en pratique confondues, puisqu'elles sont reliées par un conduit interne 106. La voie A-D est reliée aux gorges G1 et G6 ; la voie B est reliée à la gorge G2 par conduit interne, la voie C est reliée à la gorge G4 par conduit interne.
La valve 34 comporte deux voies aval E et F. La voie E est reliée à la gorge G5 par conduit interne, la voie F est reliée à la gorge G3 par conduit interne.
Le tiroir est prévu pour prendre deux positions I et II.
En position I ou position sans assistance (figure 6A), le tiroir 104 se positionne du côté de la gorge G1 (plutôt que du côté de la gorge G6, suivant l'axe X). Dans cette position, la gorge H1 met en relation les gorges G1 et G2, et la gorge H2 met en relation les gorges G3, G4 et G5.
En position II ou position du mode 'assisté' (figure 6B), le tiroir 104 se positionne du côté de la gorge G6. Dans cette position, la gorge H1 met en relation les gorges G2 et G3 ; la gorge H2 met en relation les gorges G5 et G6.

## Revendications

1. Système de transmission pour un véhicule (10), comportant une transmission principale (16) non-hydraulique apte à entraîner des organes de déplacement du véhicule, et une transmission auxiliaire (20) constituée par un dispositif (22) de transmission hydraulique comportant :
- une pompe principale (24) prévue pour alimenter en fluide au moins un moteur hydraulique (26A,26B) ;
- une pompe auxiliaire (25) prévue pour maintenir une pression de fluide minimale dans au moins un conduit auxiliaire ;
- un limiteur de pression (44) relié à un orifice de refoulement de la pompe auxiliaire ;
les pompes principale et auxiliaire étant susceptibles d'être actionnées conjointement par des moyens d'entraînement (18) pour délivrer du fluide sous pression ; et
- ledit au moins un moteur étant prévu pour entraîner au moins un organe de déplacement (14A, 14B) du véhicule ;
le système **se caractérisant en ce que** le dispositif comporte en outre :
- une liaison (64) dite de bipasse entre un orifice de refoulement de la pompe auxiliaire et un réservoir sans surpression (52) ;
- de premiers moyens de restriction (58), agencés sur la liaison de bipasse, et aptes à maintenir une pression de protection de pompe dans une partie de protection de pompe (561) de la liaison de bipasse, ladite pression de protection de pompe étant inférieure à une pression de tarage dudit limiteur de pression ;
- des moyens (41) pour appliquer ladite pression de protection de pompe à des orifices principaux de la pompe principale lorsque celle-ci est actionnée mais ne débite pas.

2. Système selon la revendication 1, dans lequel la pompe principale (24) est une pompe rotative, et notamment une pompe à plateau oscillant.

3. Système selon la revendication 1 ou 2, dans lequel les premiers moyens de restriction sont agencés pour maintenir une pression de protection de pompe inférieure à 20 Bars et de préférence à 10 Bars.

4. Système selon l'une quelconque des revendications 1 à 3, dans lequel le dispositif (22) comporte une valve de bipasse (50) interposée sur ladite liaison de bipasse et présentant :
- une première position (I), dans laquelle ladite valve de bipasse permet à la pompe auxiliaire (25) de débiter à travers la liaison de bipasse;
- une deuxième position (II), dans laquelle ladite valve de bipasse interrompt le flux sur ladite liaison de bipasse et permet le passage de fluide vers ledit au moins un conduit auxiliaire.

5. Système selon l'une quelconque des revendications 1 à 4, dans lequel le dispositif (22) comporte
- deux conduits de pompe (28A,28B) reliés aux orifices principaux (24A,24B) de la pompe principale, et deux conduits de moteur (30,32) reliés aux orifices principaux dudit au moins un moteur ; et
- une valve d'activation (34) présentant deux voies amont (A,C) aptes à être reliées aux deux conduits de pompe, et deux voies aval (E,F) aptes à être reliées aux deux conduits de moteur ;
ladite valve d'activation présentant une première position (I) dans laquelle les deux voies amont sont reliées l'une à l'autre, et les deux voies aval sont reliées l'une à l'autre, et une deuxième position (II) dans laquelle les deux voies amont sont reliées respectivement aux deux voies aval.

6. Système selon la revendication 5, dans lequel ladite valve d'activation comporte en outre une troisième voie amont (B), apte à être reliée à une source de fluide de mise sous pression ; dans la première position (I) de la valve d'activation (34), la troisième voie amont est reliée aux deux voies aval et est ainsi apte à être reliée aux deux conduits de moteur ; dans la deuxième position de la valve d'activation (34), la troisième voie amont est isolée.

7. Système selon la revendication 4 et la revendication 5 ou 6, dans lequel le dispositif (22) comporte une première valve de pilotage (68), dont une voie de sortie (C,D) est reliée à une chambre de commande hydraulique commandant la position de la valve d'activation, et une voie d'entrée (A) est susceptible d'être reliée à une source de fluide de pilotage via ladite valve de bipasse (50), et ladite valve de pilotage est apte à apte à mettre en relation ou à isoler ladite source de fluide de pilotage et ladite chambre de commande.

8. Système selon l'une quelconque des revendications 1 à 7, dans lequel ledit au moins un moteur présente :
- un premier conduit de moteur (30,32) pour son alimentation de fluide et un deuxième conduit de moteur (30,32) pour l'échappement de fluide du moteur, susceptibles d'être mis en communication avec des cylindres aménagés dans un bloc-cylindres et comprenant des pistons aptes à coulisser dans ces cylindres ;
- un conduit de carter (40A,40B) raccordé à un espace interne aménagé à l'intérieur d'un carter (38A,38B) contenant le bloc-cylindres ;
ledit au moins un moteur est susceptible d'adopter une configuration de travail, dans laquelle les pistons sont susceptibles de générer un couple moteur ou de freinage sous l'effet d'une différence de pression de fluide entre les conduits de moteur, ainsi qu'une configuration dite de roue libre, dans laquelle les pistons sont maintenus en position rentrée à l'intérieur des cylindres et ne génèrent aucun couple ;
le dispositif comporte en outre un accumulateur (74) susceptible d'être relié aux deux conduits de moteur, et susceptible d'alimenter le conduit de carter pour la mise sous pression de ce conduit.

9. Système selon la revendication 8, dans lequel le dispositif (22) comprend en outre une valve d'accumulateur (76) dont une voie est reliée à l'accumulateur, et présentant une première position dans laquelle elle relie celui-ci à une source de fluide de remplissage, et une deuxième position dans laquelle elle les isole.

10. Système selon les revendications 4 et 9, dans lequel la valve d'accumulateur (76) comporte une chambre de commande hydraulique (761), qui est reliée à une voie (D) de la valve de bipasse (50) permettant le pilotage de la valve d'accumulateur par la valve de bipasse.

11. Système selon l'une quelconque des revendications 8 à 10, dans lequel une desdites pompes principale (24) et auxiliaire (25) est apte à être reliée à l'accumulateur lorsque ce dernier est relié aux conduits de moteur pour la mise sous pression de ceux-ci.

12. Système selon l'une quelconque des revendications 1 à 11, dans lequel le dispositif (22) comporte en outre de deuxièmes moyens de restriction (62), agencés sur la liaison de bipasse (64) et aptes à maintenir une pression de protection de moteur, inférieure à la pression de protection de pompe, dans une partie de protection de moteur de la liaison de bipasse ; et
dont ledit au moins un moteur présente un espace interne aménagé à l'intérieur d'un carter contenant le bloc-cylindres, auquel ladite partie de protection de moteur est susceptible d'être reliée.

13. Système selon la revendication 12, dans lequel les premiers moyens de restriction comportent un premier clapet (58), taré à la pression de protection de pompe, et les deuxièmes moyens de restriction comportent en outre un deuxième clapet (62), taré à la pression de protection de moteur, ledit premier clapet et ledit deuxième clapet étant agencés en série sur la liaison de bipasse (64).

14. Système de transmission selon l'une quelconque des revendications 1 à 13, dont les moyens d'entraînement comportent un moteur à combustion interne (18), à une sortie de puissance (21) duquel les pompes principale et auxiliaire sont couplées de manière permanente, c'est-à-dire sans embrayage.

15. Système de transmission selon l'une quelconque des revendications 1 à 14, comportant en outre :
- un embrayage, interposé entre lesdits moyens d'entraînement (18) et les pompes principale et secondaire ;
- des moyens de commande, aptes à placer le système dans un mode dit 'embrayé', en activant l'embrayage ;
lesdits moyens pour appliquer la pression de protection de pompe aux orifices principaux de la pompe principale lorsque celle-ci est actionnée mais ne débite pas assurant leur fonction en permanence pendant ledit mode embrayé.

## Patentansprüche

1. Übertragungssystem für ein Fahrzeug (10), das eine nicht hydraulische Hauptübertragung (16) aufweist, die geeignet ist, um Bewegungsorgane des Fahrzeugs anzutreiben, und eine Hilfsübertragung (20), die aus einer hydraulischen Übertragungsvorrichtung (22) besteht, die aufweist:
- eine Hauptpumpe (24), die vorgesehen ist, um mindestens einen hydraulischen Motor (26A, 26B) mit Fluid zu versorgen,
- eine Hilfspumpe (25), die vorgesehen ist, um einen Mindestfluiddruck in mindestens einer Hilfsleitung aufrecht zu erhalten,
- einen Druckminderer (44), der mit einer Förderöffnung der Hilfspumpe verbunden ist,
wobei die Hauptpumpe und die Hilfspumpe gemeinsam von Antriebsmitteln (18) betätigt werden können, um Fluid unter Druck zu liefern, und
- wobei der mindestens eine Motor vorgesehen ist, um mindestens ein Bewegungsorgan (14A, 14B) des Fahrzeugs anzutreiben,
wobei das System **dadurch gekennzeichnet ist, daß** die Vorrichtung ferner aufweist:
- eine Bypass genannte Verbindung (64) zwischen einer Förderöffnung der Hilfspumpe und einem Behälter (52) ohne Überdruck,
- erste Beschränkungsmittel (58), die auf der Bypassverbindung eingerichtet und geeignet sind, um einen Pumpenschutzdruck in einem Pumpenschutzteil (561) der Bypassverbindung aufrecht zu erhalten, wobei der Pumpenschutzdruck niedriger ist als ein Einstelldruck des Druckminderers,
- Mittel (41) zum Anlegen des Pumpenschutzdrucks an Hauptöffnungen der Hauptpumpe, wenn diese betätigt wird aber nicht fördert.

2. System nach Anspruch 1, bei dem die Hauptpumpe (24) eine Kreiselpumpe und insbesondere eine Taumelscheibenpumpe ist.

3. System nach Anspruch 1 oder 2, bei dem die ersten Beschränkungsmittel eingerichtet sind, um einen Pumpenschutzdruck niedriger als 20 bar und vorzugsweise als 10 bar aufrechtzuerhalten.

4. System nach einem der Ansprüche 1 bis 3, bei dem die Vorrichtung (22) ein Bypassventil (50) aufweist, das auf der Bypassverbindung eingefügt ist und aufweist:
- eine erste Position (I), in der das Bypassventil es der Hilfspumpe (25) erlaubt, durch die Bypassverbindung zu fördern,
- eine zweite Position (II), in der das Bypassventil den Strom auf der Bypassverbindung unterbricht und das Durchgehen von Fluid zu der mindestens einen Hilfsleitung erlaubt.

5. System nach einem der Ansprüche 1 bis 4, bei dem die Vorrichtung (22) aufweist
- zwei Pumpenleitungen (28A, 28B), die mit den Hauptöffnungen (24A, 24B) der Hauptpumpe verbunden sind, und zwei Motorleitungen (30, 32), die mit den Hauptöffnungen des mindestens einen Motors verbunden sind, und
- ein Betätigungsventil (34), das zwei stromaufwärtige Kanäle (A, C) aufweist, die geeignet sind, um mit den zwei Pumpenleitungen verbunden zu werden, und zwei stromabwärtige Kanäle (E, F), die geeignet sind, um mit den zwei Motorleitungen verbunden zu werden,
wobei das Betätigungsventil eine erste Position (I) aufweist, in der die zwei stromaufwärtigen Kanäle miteinander verbunden sind, und die zwei stromabwärtigen Kanäle miteinander verbunden sind, und eine zweite Position (II), in der die zwei stromaufwärtigen Kanäle jeweils mit den zwei stromabwärtigen Kanälen verbunden sind.

6. System nach Anspruch 5, bei dem das Betätigungsventil ferner einen dritten stromaufwärtigen Kanal (B) aufweist, der geeignet ist, um mit einer Fluidquelle zum Druckbeaufschlagen verbunden zu werden, in der ersten Position (I) des Betätigungsventils (34), der dritte stromaufwärtige Kanal mit den zwei stromabwärtigen Kanälen verbunden und daher geeignet ist, um mit den zwei Motorleitungen verbunden zu werden, in der zweiten Position des Betätigungsventils (34) der dritte stromaufwärtige Kanal isoliert ist.

7. System nach Anspruch 4 und Anspruch 5 oder 6, bei dem die Vorrichtung (22) ein erstes Steuerventil (68) aufweist, von dem ein Ausgangskanal (C, D) mit einer hydraulischen Steuerkammer verbunden ist, die die Position des Betätigungsventils steuert, und ein Eingangskanal (A) mit einer Steuerfluidquelle über das Bypassventil (50) verbunden werden kann, und das Steuerventil geeignet ist, um die Steuerfluidquelle und die Steuerkammer zu verbinden oder zu isolieren.

8. System nach einem der Ansprüche 1 bis 7, bei dem der mindestens eine Motor aufweist:
- eine erste Motorleitung (30, 32) für seine Fluidversorgung und eine zweite Motorleitung (30, 32) für das Austreten von Fluid aus dem Motor, die mit Zylindern in Kommunikation gebracht werden können, die in einem Zylinderblock eingerichtet sind und Kolben aufweisen, die geeignet sind, um in diesen Zylindern zu gleiten,
- eine Gehäuseleitung (40A, 40B), die an einen Innenraum angeschlossen ist, der im Inneren eines Gehäuses (38A, 38B), das den Zylinderblock enthält, eingerichtet ist,
wobei der mindestens eine Motor eine Arbeitskonfiguration annehmen kann, in der die Kolben ein Motormoment oder Bremsmoment unter der Einwirkung eines Fluiddruckunterschieds zwischen den Motorleitungen erzeugen kann, sowie eine so genannte Freilaufkonfiguration, in der die Kolben im Inneren der Zylinder in eingefahrener Position gehalten werden und kein Moment erzeugen,
wobei die Vorrichtung ferner einen Speicher (74) aufweist, der mit den zwei Motorleitungen verbunden werden kann und die Gehäuseleitung zum Druckbeaufschlagen dieser Leitung versorgen kann.

9. System nach Anspruch 8, bei dem die Vorrichtung (22) ferner ein Speicherventil (76) aufweist, von dem ein Kanal mit dem Speicher verbunden ist und eine erste Position aufweist, in der es diesen mit einer Füllfluidquelle verbindet, und eine zweite Position, in der es sie isoliert.

10. System nach den Ansprüchen 4 und 9, bei dem das Speicherventil (76) eine hydraulische Steuerkammer (761) aufweist, die mit einem Kanal (D) des Bypassventils (50) verbunden ist, der das Steuern des Speicherventils durch das Bypassventil erlaubt.

11. System nach einem der Ansprüche 8 bis 10, bei dem entweder die Hauptpumpe (24) oder die Hilfspumpe (25) geeignet ist, um mit dem Speicher verbunden zu werden, wenn dieser Letztere mit den Motorleitungen zum Druckbeaufschlagen dieser verbunden ist.

12. System nach einem der Ansprüche 1 bis 11, bei dem die Vorrichtung (22) ferner zweite Beschränkungsmittel (62) aufweist, die auf der Bypassverbindung (64) eingerichtet und geeignet sind, um einen Motorschutzdruck, der niedriger ist als der Pumpenschutzdruck, in einem Motorschutzteil der Bypassverbindung aufrecht zu erhalten, und
von dem mindestens ein Motor einen Innenraum aufweist, der im Inneren eines Gehäuses, das den Zylinderblock enthält, eingerichtet ist, mit dem der Motorschutzteil verbunden werden kann.

13. System nach Anspruch 12, bei dem die ersten Beschränkungsmittel eine erste Klappe (58) aufweisen, die auf den Pumpenschutzdruck eingestellt ist, und die zweiten Beschränkungsmittel, ferner eine zweite Klappe (62) aufweisen, die auf den Motorschutzdruck eingestellt ist, wobei die erste Klappe und die zweite Klappe in Serie auf der Bypassverbindung (64) eingerichtet sind.

14. Übertragungssystem nach einem der Ansprüche 1 bis 13, dessen Antriebsmittel einen Verbrennungsmotor (18) aufweisen, mit einem Leistungsausgang (21), dessen die Hauptpumpe und die Hilfspumpe dauerhaft, das heißt ohne Kupplung, gekuppelt sind.

15. Übertragungssystem nach einem der Ansprüche 1 bis 14, das ferner aufweist:
- eine Kupplung, die zwischen die Antriebsmittel (18) und die Hauptpumpe und Hilfspumpe eingefügt ist,
- Steuermittel, die geeignet sind, um das System durch Betätigen der Kupplung in einen so genannten "gekuppelten" Modus zu versetzen,
wobei die Mittel zum Anlegen des Pumpenschutzdrucks an die Hauptöffnungen der Hauptpumpe, wenn diese betätigt wird aber nicht fördert, ihren Dauerbetrieb während des gekuppelten Modus sicherstellen.

## Claims

1. A hydraulic transmission system for a vehicle (10), the system including a non-hydraulic main transmission (16) suitable for driving vehicle mover members, and an auxiliary transmission (20) constituted by hydraulic transmission apparatus (22) including:
a main pump (24) serving to feed at least one hydraulic motor (26A, 26B) with fluid;
• an auxiliary pump (25) serving to maintain some minimum fluid pressure in at least one auxiliary duct; and
• a pressure limiter (44) connected to a delivery port of the auxiliary pump;
the main pump and the auxiliary pump being suitable for being actuated jointly by drive means (18) for the purpose of delivering pressurized fluid; and
said at least one motor serving to drive at least one vehicle mover member (14A, 14B);
the system being **characterized in that** the apparatus further includes:
• a "bypass" connection (64) between a delivery port of the auxiliary pump and an unpressurized reservoir (52);
• first constriction means (58) arranged on the bypass connection and suitable for maintaining a pump protection pressure in a pump protection portion (561) of the bypass connection, said pump protection pressure being less than a calibration pressure of said pressure limiter; and
• means (41) for applying said pump protection pressure to main ports of the main pump when said pump is actuated but is not delivering.

2. A system according to claim 1, in which the main pump (24) is a rotary pump, and in particular a pump having a swashplate.

3. A system according to claim 1 or claim 2, wherein the first constriction means are arranged to maintain a pump protection pressure less than 20 bars, and preferably less than 10 bars.

4. A system according to any one of claims 1 to 3, wherein the apparatus (22) includes a bypass valve (50) interposed on said bypass connection and having:
• a first position (I), in which said bypass valve enables the auxiliary pump (25) to deliver through the bypass connection; and
• a second position (II), in which said bypass valve interrupts the flow through said bypass connection and enables fluid to pass towards said at least one auxiliary duct.

5. A system according to any one of claims 1 to 4, wherein the apparatus (22) includes:
• two pump ducts (28A, 28B) connected to the main ports (24A-24B) of the main pump, and two motor ducts (30, 32) connected to the main ports of said at least one motor; and
• an activation valve (34) having two upstream ports (A, C) suitable for being connected to the two pump ducts, and two downstream ports (E, F) suitable for being connected to the two motor ducts;
said activation valve having a first position (I) in which the two upstream ports are interconnected, and the two downstream ports are interconnected, and a second position (II) in which the two upstream ports are connected to respective ones of the two downstream ports.

6. A system according to claim 5, wherein the activation valve further includes a third upstream port (B) suitable for being connected to a pressurizing fluid source; when the activation valve (34) is in the first position (I), the third upstream port is connected to the two downstream ports and is thus suitable for being connected to the two motor ducts; when the activation valve (34) is in the second position, the third upstream port is isolated.

7. A system according to claim 4 and claim 5 or 6, wherein the apparatus (22) includes a first pilot valve (68) having an outlet port (C, D) connected to a hydraulic control chamber controlling the position of the activation valve, and an inlet port (A) that is suitable for being connected to a pilot fluid source via said bypass valve (50), and said pilot valve is suitable for putting said pilot fluid source and said control chamber into communication with each other or for isolating them from each other.

8. A system according to any one of claims 1 to 7, wherein said at least one motor has:
• a first motor duct (30, 32) for feeding said motor with fluid, and a second motor duct (30, 32) for discharging fluid from the motor, which motor ducts are suitable for being put into communication with cylinders arranged in a cylinder block and including pistons suitable for sliding in said cylinders; and
• a casing duct (40A, 40B) connected to an internal space arranged inside a casing (38A, 38B) containing the cylinder block;
said at least one motor being suitable for taking up a work configuration, in which the pistons can generate drive torque or braking torque under the effect of a fluid pressure difference between the motor ducts, and a "freewheel" configuration, in which the pistons are maintained in the retracted position inside the cylinders and do not generate any torque;
the apparatus further including an accumulator (74) suitable for being connected to both motor ducts, and suitable for feeding the casing duct for putting said casing duct under pressure.

9. A system according to claim 8, wherein the apparatus (22) further includes an accumulator valve (76) that has a port connected to the accumulator, and that has a first position, in which it connects said accumulator to a filling fluid source, and a second position, in which it isolates said accumulator from said filling fluid source.

10. A system according to claims 4 and 9, wherein the accumulator valve (76) has a hydraulic control chamber (761) that is connected to a port (D) of the bypass valve (50) enabling the accumulator valve to be controlled by the bypass valve.

11. A system according to any one of claims 8 to 10, wherein one of said main and of said auxiliary pumps (24, 25) is suitable for being connected to the accumulator when said accumulator is connected to the motor ducts for putting said ducts under pressure.

12. A system according to any one of claims 1 to 11, wherein the apparatus (22) further includes second constriction means (62), arranged on the bypass connection (64) and suitable for maintaining a motor protection pressure, less than the pump protection pressure, in a motor protection portion of the bypass connection; and
wherein said at least one motor has an internal space arranged inside a casing containing the cylinder block, to which space said motor protection portion can be connected.

13. A system according to claim 12, wherein the first restriction means include a first calibrated valve (58), calibrated to the pump protection pressure, and the second constriction means further include a second calibrated valve (62), calibrated to the motor protection pressure, said first calibrated valve and said second calibrated valve being arranged in series on the bypass connection (64).

14. A transmission system according to any one of claims 1 to 13, the drive means of which include an internal combustion engine (18) having a power outlet (21) to which the main and auxiliary pumps (24, 25) are coupled continuously, i.e. without any clutches.

15. A transmission system according to any one of claims 1 to 14, further including:
• a clutch, interposed between said drive means (18) and the main and secondary pumps; and
• control means, suitable for placing the system in a "clutched" mode by activating the clutch;
said means for applying pump protection pressure to the main ports of the main pump when said main pump is actuated but is not delivering performing their function continuously during said clutched mode.
